# EUROPÄISCHE PATENTSCHRIFT

(11) **EP 2 458 135 B1**
(45) Veröffentlichungstag und Bekanntmachung des Hinweises auf die Patenterteilung: **13.11.2019**
(21) Anmeldenummer: 11190242.5
(22) Anmeldetag: 23.11.2011
(51) Int. Cl.: E21B 19/16, E21B 44/00, G01B 11/27

(54) **Verfahren und Vorrichtung zur halbautomatischen Justierung einer Handhabungseinrichtung**
Method and device for semi-automatic adjustment of a handling device
Procédé et dispositif d'ajustement semi-automatique d'un dispositif de manipulation

(30) Priorität: 26.11.2010 DE 102010060823
(43) Veröffentlichungstag der Anmeldung: 30.05.2012
(73) Patentinhaber: BENTEC GMBH Drilling & Oilfield Systems, 48455 Bad Bentheim (DE)
(72) Erfinder: Aalderink, Jan, 48455 Bad Bentheim (DE)
(74) Vertreter: Werner & ten Brink

(56) Entgegenhaltungen:
- WO-A1-2006/112689
- WO-A1-2007/061315
- WO-A1-2008/030079
- US-A1- 2004 174 163
- US-A1- 2005 047 884

## Beschreibung

Die Erfindung betrifft ein Verfahren zur halbautomatischen Justierung einer Handhabungseinrichtung, insbesondere einer automatischen Handhabungseinrichtung, und eine zur Ausführung des Verfahrens vorgesehene Vorrichtung.

Die Erfindung ist im Zusammenhang mit Überlegungen zur besseren Automatisierung von Vorgängen auf einer Bohranlage, nämlich einer Bohranlage für Tiefbohrungen, also zum Abteufen von Bohrungen auf fossile Energieträger oder zur Nutzung von Geothermie usw., entstanden. Ein Beispiel für eine dort zu positionierende Handhabungseinrichtung ist ein an sich bekanntes Zangensystem, das zum Verbinden und zum Trennen von Gestängeelementen eines Bohrstrangs vorgesehen ist. Im Betrieb einer Bohranlage ist es mitunter erforderlich, z. B. zum Wechseln des Bohrkopfs, den gesamten Bohrstrang aus dem Bohrloch zu entfernen und dabei müssen jeweils einzelne Gestängeelemente oder auch Gruppen von Gestängeelementen, z. B. bis zu drei Gestängeelemente, jeweils vom Bohrstrang getrennt werden, so dass dieser sukzessiv weiter aus dem Bohrloch heraufgezogen werden kann. Zum Trennen des Bohrgestänges ist das Zangensystem vorgesehen, und die Justierung des Zangensystems an einer Verbindungsstelle des Bohrgestänges ist bisher manuell erfolgt. Dafür wird das Zangensystem zunächst über dem Bohrloch positioniert, und für eine korrekte Ausrichtung in Bezug auf die zu lösende Verbindungsstelle ist eine geeignete Beweglichkeit des Zangensystems, z. B. eine translatorische Beweglichkeit, vorgesehen, so dass in dieser Hinsicht eine manuelle Justierung des Zangensystems bis zum Erreichen der jeweiligen Höhe der Verbindungsstelle erfolgt.

Die manuelle Justierung des Zangensystems erfordert die Anwesenheit eines Bedieners in der Nähe des Zangensystems und damit üblicherweise direkt im Bereich des Bohrlochs. Eine Gefährdung des Bedieners ist dabei nicht ausgeschlossen, wenn auch diese üblicherweise nicht unmittelbar von der Bedienung des Zangensystems herrührt, sondern sich z. B. aus der potentiellen Gefahr von vom Bohrturm evtl. herunterfallenden Gegenständen und dergleichen ergibt.

In der US 4,468,959 wird ein Verfahren beschrieben um eine Länge von miteinander kombinierten Bohrgestängeelementen (stands) zu bestimmen.

In der US 2009/0314137 A wird ein Zangensystem zur Handhabung von Rohrgestänge beschrieben, wobei eine Möglichkeit zur Handhabung von Bohrgestänge mit unterschiedlichen Durchmessern im Vordergrund steht.

Aus der WO 2007/061315 A, die als nächstliegender Stand der Technik angesehen wird, ist ein Verfahren bekannt, mit dem auf einer Bohranlage ein Zangensystem in Bezug auf eine Trennstelle zwischen zwei Gestängeelementen eines Bohrstrangs positionierbar ist. Dazu ist eine Kamera an einer Führung vertikal und damit parallel zum Verlauf des Bohrstrangs beweglich. Wenn ein von der Kamera aufgenommenes Bild die Trennstelle zwischen zwei Gestängeelementen zeigt, ergibt sich aus der momentanen vertikalen Position der Kamera an der Führung eine vertikale Position der Trennstelle. Damit ist das Zangensystem in eine entsprechende vertikale Position verfahrbar, um den Bohrstrang zu trennen.

Aus der US 2004/0174163 A1 ist ein Verfahren bekannt, bei dem die Trennstelle zwischen zwei Gestängeelementen eines Bohrstrangs mittels einer elektromagnetischen Sensorik erkannt wird. Aus der WO 2008/030079 A1 ist ein Verfahren bekannt, bei dem ein oberes Ende eines Pipelinestrangs mittels einer Kamera, einer Lichtschranke, eines mechanischen Sensors oder dergleichen erkannt wird.

Eine Aufgabe der vorliegenden Erfindung besteht entsprechend darin, ein einfaches Verfahren und eine mechanisch unkomplizierte Vorrichtung anzugeben, mit dem/der eine Handhabungseinrichtung, also z. B. ein Zangensystem wie oben erwähnt, halbautomatisch positioniert werden kann, ohne dass der Eingriff oder eine Anwesenheit eines weiteren Bedieners am Ort der Handhabungseinrichtung erforderlich ist.

Diese Aufgabe wird erfindungsgemäß mit einem Verfahren zur halbautomatischen Justierung einer Handhabungseinrichtung, insbesondere einer automatischen Handhabungseinrichtung, mit den Merkmalen des Anspruchs 1 gelöst. Dazu ist vorgesehen, dass ein Bediener einen als Positionsanzeigevorrichtung fungierenden Laserpointer justiert und nach erfolgter Justierung eine Orientierung des Laserpointers bestätigt, wobei mit oder nach der Bestätigung die Orientierung des Laserpointers aufgenommen und in Bewegungsdaten, also z. B. Koordinaten, zur Positionierung der Handhabungseinrichtung umgewandelt wird.

Dieses Verfahren kommt speziell zur Verwendung auf einer Bohranlage, also einer Bohranlage zum Abteufen von Tiefbohrungen, in Betracht, so dass der oben erwähnte Bediener einer solchen Bohranlage, z. B. ein Bohrmeister, der seine Aufgaben üblicherweise von einem als Kabine ausgebildeten Führerstand (der Drillerkabine), verrichtet, den Laserpointer justieren kann. Das Verfahren umfasst bei einer Ausführung auf oder für eine Bohranlage die Schritte, dass der Bediener den Laserpointer auf eine Verbindungsstelle zwischen zwei Gestängeelementen eines mit der Bohranlage betätigten Bohrstrangs richtet sowie nach erfolgter Justierung die Orientierung des Laserpointers bestätigt und einen weiteren Verfahrensschritt, mit dem auf Basis der aufgenommenen Orientierung des Laserpointers als Handhabungseinrichtung ein Zangensystem in Bezug auf die Verbindungsstelle automatisch positioniert und eine Steuerung des Zangensystems aktiviert oder zur Aktivierung freigeschaltet wird. Die Aktivierung des Zangensystems umfasst dann nachfolgende Schritte, mit denen die Gestängeelemente an der Verbindungsstelle getrennt werden.

Die oben genannte Aufgabe wird auch mit einer Vorrichtung zur halbautomatischen Justierung einer Handhabungseinrichtung, insbesondere einer automatischen Handhabungseinrichtung, mit den Merkmalen des zweiten unabhängigen Anspruchs gelöst. Dazu ist vorgesehen, dass die Vorrichtung Mittel zur Ausführung des Verfahrens oder seiner Ausgestaltungen, nämlich einen durch einen Bediener justierbaren und als Positionsanzeigevorrichtung fungierenden Laserpointer sowie Mittel zum Bestätigen einer Orientierung des Laserpointers nach erfolgter Justierung und Mittel zum Erfassen einer Orientierung des Laserpointers sowie schließlich Mittel zur Umwandlung der erfassten Orientierung in Bewegungsdaten, also z. B. Koordinaten, zur Positionierung der Handhabungseinrichtung umfasst.

Bei dem Verfahren oder einer nach dem Verfahren arbeitenden oder der das Verfahren umsetzenden Vorrichtung ist die Positionsanzeigevorrichtung ein mit zumindest einem Freiheitsgrad beweglich angeordneter Laserpointer, wobei zur Aufnahme der Orientierung des Laserpointers eine Positionsinformation in Bezug auf den oder jeden Freiheitsgrad aufgenommen wird. Bei einem mit genau einem Freiheitsgrad beweglich angeordneten Laserpointer, insbesondere bei Anwendung des Verfahrens oder der korrespondierenden Vorrichtung im Zusammenhang mit einer Bohranlage zum Trennen von Bohrgestänge an einer Verbindungsstelle, erlaubt der Freiheitsgrad eine Nickbewegung, also eine rotatorische Bewegungsmöglichkeit, die es erlaubt, einen gewissen Abschnitt eines vertikal orientierten Bohrstrangs zu erfassen und auf dem Bohrstrang entsprechend mit dem Laserpointer die Verbindungsstelle aufzusuchen. Der Laserpointer ist dafür z. B. ortsfest in einer Vorrichtung angebracht, die eine Schwenkbewegung in zumindest einer Ebene und zumindest als Nickbewegung erlaubt. Weitere Freiheitsgrade, also eine rotatorische Beweglichkeit um zwei oder drei Raumachsen, sind ebenfalls denkbar und kommen z. B. dann in Betracht, wenn - anders als bei einem Bohrstrang, dessen Position durch das Bohrloch festgelegt und damit im Wesentlichen unveränderlich ist - beliebige Raumpunkte aufzusuchen sind, z. B. Fächer eines Hochregallagers oder dergleichen.

Aus der WO 2009/148304 A ist ein Verfahren zum Verschweißen von Rohrsegmenten für Unterwasserpipelines und konkret das Erkennen des Endes eines letzen Segments der Pipeline und eines damit zu verbindenden Endes eines weiteren Rohrsegments beschrieben. Die dazu vorgesehene Messeinrichtung ist relativ zu den zu erfassenden Enden der Rohrsegmente beweglich und die erfassten Daten dienen zur Ansteuerung einer Schweißeinrichtung. Bei der Erfindung wird aber die Positionsanzeigevorrichtung, also zum Beispiel ein Laserpointer, auf die Trennstelle ausgerichtet und diese Ausrichtung erfasst und schließlich zur Ansteuerung eines Zangensystems zum Trennen des Bohrgestänges verwendet. Bei der WO 2009/148304 A werden zwar geometrische Daten und Positionsinformationen hinsichtlich der Rohrenden erfasst, dies jedoch nicht indem dabei eine Positionsanzeigevorrichtung (Laserpointer) orientiert und dessen Orientierung erfasst wird, sondern vielmehr indem mit einem komplexen Meßsystem eine Vielzahl von Daten erfasst wird, die später (soweit nötig) in Relation zur Position des Meßsystems gesetzt werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Vorrichtung eine Bedieneinrichtung z. B. nach Art eines Trackballs oder dergleichen zur Beeinflussung der Orientierung des Laserpointers umfasst, ist eine besonders angenehme und intuitive Justierung der Positionsanzeigevorrichtung möglich. Zudem kommt in Betracht, dass als Bedieneinrichtung eine Bedieneinrichtung verwendet wird, die an einem Steuerstand, z. B. in einer Kabine des Bohrmeisters, bereits vorhanden ist und dort für andere Steuerungs- oder Positionieraufgaben verwendet wird. Dann kann durch Umschalten auf die Funktionalität zur halbautomatischen Justierung einer Handhabungseinrichtung die bereits vorhandene Bedieneinrichtung als Bedieneinrichtung zur Beeinflussung der Orientierung der Positionsanzeigevorrichtung wirksam werden.

Wenn eine Bedieneinrichtung vorgesehen ist, ist diese im Betrieb zur Ansteuerung zumindest eines Aktors, z. B. eines Stellmotors oder dergleichen, zur Justierung der Positionsanzeigevorrichtung und zur Beeinflussung von deren Orientierung wirksam, so dass die Positionsinformation anhand der Ansteuerung des oder jedes Aktors abgeleitet werden kann oder ableitbar ist. Zusätzlich oder alternativ kommt auch eine Aufnahme der Orientierung der Positionsanzeigevorrichtung z. B. über einen der Positionsanzeigevorrichtung zugeordneten Absolutwert- oder Inkrementalgeber, einen mit einer Änderung der Justierung veränderlichen Widerstand oder dergleichen in Betracht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- Fig. 1: eine schematisch vereinfachte Darstellung einzelner Teile einer Bohranlage, insbesondere einen Bohrstrang, und einen in Bezug auf den Bohrstrang justierbaren Laserpointer,
- Fig. 2: und
- Fig. 3: die Verhältnisse aus Fig. 1 und eine Handhabungseinrichtung zum Verbinden oder Trennen einzelner Gestängeelemente des Bohrstrangs.

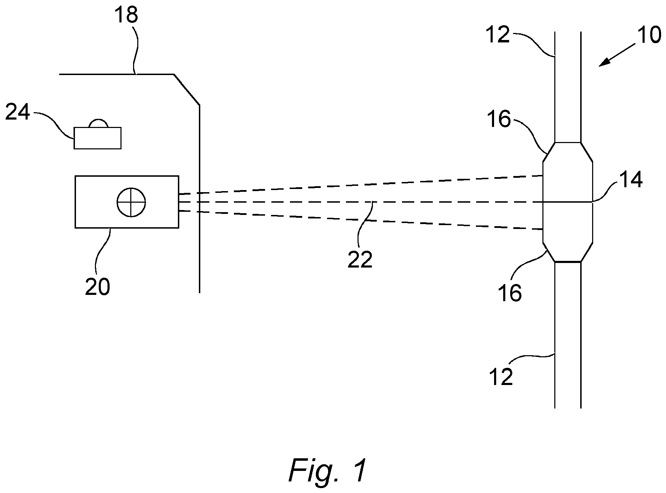

Fig. 1 zeigt schematisch stark vereinfacht einen Bohrstrang 10 einer selbst nicht näher dargestellten, aber an sich bekannten Bohranlage. Von dem Bohrstrang 10 sind die Enden zweier Gestängeelemente 12 dargestellt. Die Gestängeelemente 12 sind in an sich bekannter Art und Weise durch Verschrauben verbunden. Damit ergibt sich eine Verbindungsstelle 14 im Bereich einer Kontaktstelle zweier Muffen 16 jeweils eines Gestängeelementes 12. Die Verbindungsstelle 14 wird in der Fachterminologie auch als Tooljointtrennstelle bezeichnet.

Des Weiteren zeigt Fig. 1 schematisch stark vereinfacht einen Steuerstand 18 zur Bedienung der Bohranlage oder einzelner Aggregate der Bohranlage. Üblicherweise umfasst ein solcher Steuerstand 18 eine Vielzahl von Anzeigen und Bedienelementen mit denen der jeweilige Bediener, also z. B. der Bohrmeister, auf den Betrieb der Bohranlage Einfluss nehmen kann oder mit denen der Bediener über den Status der Bohranlage und/oder des Bohrvorgangs informiert wird. Solche Einzelheiten sind aus Gründen der Übersichtlichkeit nicht dargestellt. Dargestellt ist demgegenüber als Positionsanzeigevorrichtung ein Laserpointer 20, der mit einem Trackball 24 als Bedieneinrichtung justiert, also in seiner Ausrichtung beeinflusst werden kann.

Bei der Justierung des Laserpointers 20 wird dieser auf den Bohrstrang 10 gerichtet. Der Bediener erkennt dann einen Punkt, an dem ein vom Laserpointer 20 ausgehender Laserstrahl 22 auf das jeweilige Gestängeelement 12 auftrifft als Farbpunkt. Anhand einer momentanen Position des sich ergebenden Farbpunktes kann die Justierung des Laserpointers 20 verändert werden, bis der Farbpunkt an der Verbindungsstelle 14 zweier Gestängeelemente 12 auftrifft und damit entsprechend der Laserpointer 20 selbst auf diese Verbindungsstelle 14 ausgerichtet ist. Sobald insoweit die Justierung des Laserpointers 20 abgeschlossen ist, kann der Bediener die aktuelle Orientierung des Laserpointers 20 bestätigen. Die Orientierung des Laserpointers 20 wird sodann aufgenommen. Bei einem nur in einer Ebene verschwenkbaren (Nickbewegung) Laserpointer 20 wird als Orientierung eine Winkelstellung in dieser Ebene aufgenommen. Die Aufnahme der Orientierung des Laserpointers 20 erfolgt dabei entweder unmittelbar aufgrund der Bestätigung von dessen Orientierung oder im Anschluss an eine solche Bestätigung. Die Bestätigung kann durch Betätigen eines dafür vorgesehenen Bedienelements, z. B. einer Taste, erfolgen. Die Taste (nicht dargestellt) kann von dem Trackball 24 umfasst sein. Jede andere denkbare Art der Bestätigung ist alternativ oder zusätzlich ebenso möglich.

Nachdem die Orientierung des Laserpointers 20 aufgenommen worden ist, können dabei gewonnene Daten, etwa ein Winkelmass, in Bewegungsdaten für eine Handhabungseinrichtung umgewandelt werden. Als Ergebnis einer solchen Umwandlung kommen insbesondere Koordinaten zur Positionierung der Handhabungseinrichtung in Betracht.

Im Falle einer Bohranlage und einer Markierung einer Verbindungsstelle 14 zwischen zwei Gestängeelementen 12 liegt eine x-Koordinate und eine y-Koordinate mit der bekannten Position des Bohrstrangs, nämlich über dem Bohrloch, fest. Die Orientierung des Laserpointers 20 gibt also die dritte Raumkoordinate, also eine Höhe über einem auch als rig floor bezeichneten Boden- oder Arbeitsflächenniveau an. Die Berechnung der zugehörigen z-Koordinate aus einem die Orientierung des Laserpointers 20 beschreibenden Winkelmass ist eine einfache trigonometrische Berechnung. Wenn ein beliebiger Punkt im Raum mit dem Ansatz gemäß der Erfindung aufgesucht werden soll und entsprechend zwei oder mehr Raumkoordinaten als Bewegungsdaten für eine Handhabungseinrichtung abgeleitet werden sollen, kommt evtl. die Verwendung von zwei oder mehr, beabstandet angeordneten Laserpointern (nicht dargestellt) in Betracht, deren Laserstrahlen auf denselben Punkt ausgerichtet werden. Durch an sich bekannte Triangulationsverfahren kann dann der Raumpunkt des Zusammentreffens zweier oder mehrerer Laserstrahlen bestimmt werden. Bei einer Verwendung mehrerer Laserpointer kommt zur Erleichterung einer Ausrichtung der jeweiligen Laserstrahlen auf den gleichen Raumpunkt eine Verwendung von Laserpointern in Betracht, die Laserstrahlen in unterschiedlichen Farben, z. B. ein erster Laserpointer, der einen roten Laserstrahl emittiert und ein zweiter Laserpointer, der einen grünen Laserstrahl emittiert, in Betracht.

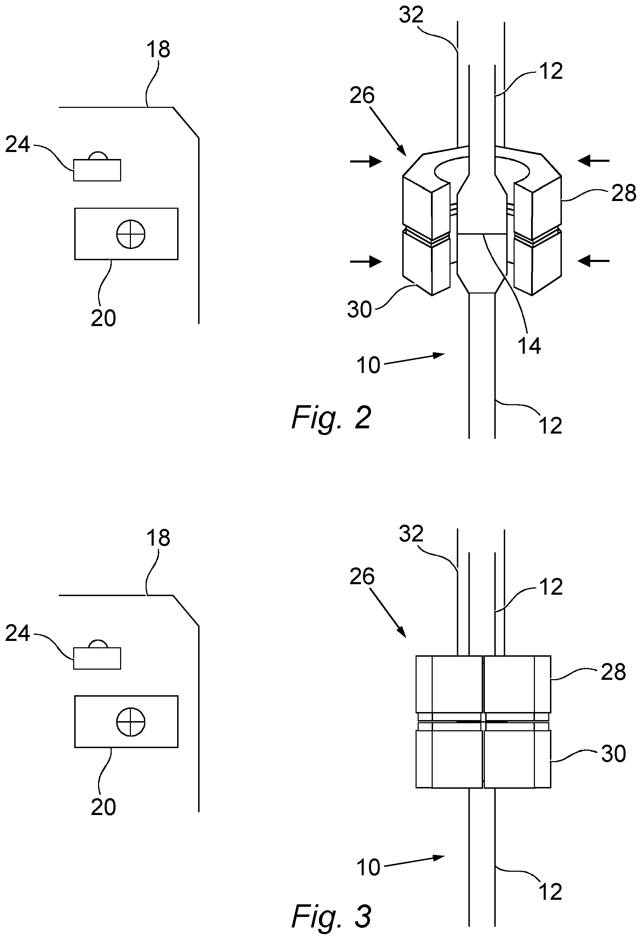

Fig. 2 und Fig. 3 zeigen die bereits anhand von Fig. 1 erläuterten Einzelheiten und zusätzlich als Beispiel für eine Handhabungseinrichtung ein Zangensystem 26 mit einer oberen und einer unteren Zange 28, 30.

Das dargestellte Zangensystem 26 ist an sich bekannt und nur teilweise und auch nur schematisch vereinfacht gezeigt. Dargestellt ist noch, dass das Zangensystem 26 z. B. ein Element umfasst, das eine translatorische Bewegung der Zangen 28, 30 erlaubt. Das translatorische Element kann z. B. mit einem Hubzylinder 32 oder einer Zahnstange realisiert sein. Das translatorische Element ermöglicht eine Positionierung beider Zangen 28, 30 derart, dass die obere und die untere Zange 28, 30 auf verschiedenen Seiten der Verbindungsstelle 14 am Bohrstrang 10 angreifen. Eine Aktivierung des Zangensystems 26 bewirkt sodann ein Trennen des Bohrstrangs 10 an der Verbindungsstelle 14, indem die beiden an der Verbindungsstelle 14 zusammentreffenden Gestängeelemente 12 mit dem Zangensystem 26 in unterschiedliche Richtungen rotiert werden. Das Zangensystem 26 kann insgesamt, z. B. durch eine Schwenkbewegung, in eine Position gebracht werden, die für die Zangen 28, 30 ein Angreifen am Bohrstrang 10 erlaubt. Aufgrund der konstanten Position des Bohrstrangs 10 über dem Bohrloch sind für eine Automatisierung dieser Bewegung keine anderen Daten als die Koordinaten des Bohrlochs erforderlich. Die zum Trennen der Gestängeelemente 12 erforderliche Höhe der Zangen 28, 30 ergibt sich durch Auswertung der Orientierung des Laserpointers 20.

Das translatorische Element zur Positionierung der Zangen 28, 30 ist hier nur exemplarisch erwähnt. Relevant ist, dass eine Positionierung der Zangen 28, 30 - oder allgemein eine Positionierung der Handhabungseinrichtung - möglich ist. Die Positionierung der Handhabungseinrichtung erfolgt dabei anhand der zuvor aufgenommenen Orientierung des Laserpointers 20. Bei einem Zangensystem 26 als Handhabungseinrichtung ist damit dessen Positionierung derart möglich ist, dass als Ergebnis der Positionierung die obere Zange 28 oberhalb des ursprünglichen Auftreffpunkts des Laserstrahls 22 (Fig. 1) am Bohrstrang 10 und die untere Zange 30 entsprechend unterhalb desselben ursprünglichen Auftreffpunkts am Bohrstrang angreift. Mit dem Laserpointer 20 wird also gleichsam die Verbindungsstelle 14 aufgesucht und markiert und das Zangensystem 26 im wesentlichen so positioniert, dass die beiden Zangen 28, 30 mittig um die Markierung positioniert werden. Wenn der Laserstrahl 22 und die davon hervorgerufene Markierung korrekt auf die Verbindungsstelle 14 ausgerichtet waren, schließen nach einer Positionierung des Zangensystems 26 anhand einer aufgenommenen Orientierung des Laserpointers 20 die beiden Zangen 28, 30 die Verbindungsstelle 14 mittig ein, so dass jede Zange 28, 30 an einer der an der Verbindungsstelle 14 zusammentreffenden Muffen 16 angreift.

Eine Aktivierung des Zangensystems 26 bewirkt also dessen Positionierung und die Positionierung der Zangen 28, 30 und sodann eine entgegengesetzte Rotation der Muffen 16, so dass auf diese Weise die beiden an der Verbindungsstelle 14 zusammentreffenden Gestängeelemente 12 getrennt werden können. Fig. 2 und Fig. 3 zeigen insoweit Momentaufnahmen beim Trennen zweier Gestängeelemente 12, wobei speziell Fig. 2 eine Situation zeigt, bei der das Zangensystem 26 bereits in Bezug auf die Verbindungsstelle 14 positioniert ist, und wobei speziell Fig. 3 eine Situation zeigt, bei der das Zangensystem 26 an den an der Verbindungsstelle 14 zusammentreffenden Gestängeelementen 12 angreift um diese nachfolgend zu trennen.

Die Positionierung des Zangensystems 26 und/oder dessen Aktivierung kann automatisch aufgrund oder Bestätigung der Orientierung des Laserpointers 20 oder jeder anderen Positionsanzeigevorrichtung erfolgen. Eine Möglichkeit insoweit besteht darin, dass die Bestätigung der Orientierung des Laserpointers 20 unmittelbar oder nach einer vorgegebenen oder vorgebbaren Wartezeit die Positionierung des Zangensystems 26 und unmittelbar anschließend oder nach nochmaligem Abwarten einer weiteren vorgegebenen oder vorgebbaren Wartezeit die Aktivierung des Zangensystems 26 bewirkt. Alternativ kann vorgesehen sein, dass die Bestätigung der Orientierung des Laserpointers 20 eine Aktivierungsmöglichkeit des Zangensystems 26 freischaltet. Die eigentliche Positionierung und/oder Aktivierung des Zangensystems 26 erfolgt dann später und z. B. aufgrund einer manuellen Freigabe durch einen Benutzer, also z. B. den Bohrmeister oder ein anderes Mitglied des Personals der Bohranlage. Zur Aktivierung des Zangensystems 26 oder zur Freischaltung der Aktivierung des Zangensystems 26 kommt eine Übermittlung eines Aktivierungs- bzw. Freischaltsignals und des Weiteren eine Übermittlung zumindest eines Bewegungsdatums in Betracht. Als Bewegungsdatum wird bei dem hier erläuterten Beispiel ein Maß für die Winkelstellung des Laserpointers 20, also in Wesentlichen ein Maß für die Höhe der mit dem Laserpointer 20 markierten Höhe der Verbindungsstelle 14 übergeben.

Anstelle des Zangensystems 26 als Beispiel für eine Handhabungseinrichtung kommt grundsätzlich auch jede andere Handhabungseinrichtung in Betracht. Z. B kann in einem Hochregallager mit einem Laserpointer ein Fach zum Ablegen oder Abholen von Material ausgewählt werden. Des Weiteren kann in einem solchen Hochregallager temporär oder dauerhaft eine Ruhe- oder Warteposition für die Handhabungseinrichtung, die in dem Hochregallager Material bewegt, ausgewählt werden, usw.

Wesentliche Aspekte der obigen Beschreibung lassen sich damit kurz wie folgt darstellen: Es werden ein Verfahren und eine Vorrichtung zur halbautomatischen Justierung einer Handhabungseinrichtung, insbesondere einer automatischen Handhabungseinrichtung, also z. B. einem Zangensystem 26 für eine Bohranlagen, angegeben, wobei ein Bediener eine Positionsanzeigevorrichtung, z. B. einen Laserpointer 20, justiert und nach erfolgter Justierung eine Orientierung der Positionsanzeigevorrichtung bestätigt, wobei mit oder nach der Bestätigung die Orientierung der Positionsanzeigevorrichtung aufgenommen und in Bewegungsdaten zur Positionierung der Handhabungseinrichtung umgewandelt wird. Die korrespondierende Vorrichtung weist Mittel zur Ausführung eines solchen Verfahrens auf, also z. B. einen Laserpointer 20 als Positionsanzeigevorrichtung, einen Trackball 24 zur Justierung der Positionsanzeigevorrichtung, und Mittel zum Bestätigen der Orientierung der Positionsanzeigevorrichtung sowie Mittel zum Aufnehmen von Daten zur Orientierung der Positionsanzeigevorrichtung und Mittel zum Ableiten von Bewegungsdaten zur Positionierung der Handhabungseinrichtung aus der aufgenommenen Orientierung. Als Mittel zum Ableiten von Bewegungsdaten aus der aufgenommenen Orientierung kommt eine Verarbeitungseinrichtung nach Art eines Mikroprozessors oder dergleichen in Betracht. Insoweit ist auch eine Realisierung des Verfahrens in Software umfasst.

### Bezugszeichenliste

- 10: Bohrstrang
- 12: Gestängeelement
- 14: Verbindungsstelle
- 16: Muffe
- 18: Steuerstand
- 20: Laserpointer
- 22: Laserstrahl
- 24: Trackball
- 26: Zangensystem
- 28: (obere) Zange
- 30: (untere) Zange
- 32: Hubzylinder

## Patentansprüche

1. Verfahren zur halbautomatischen Positionierung einer Handhabungseinrichtung oder einer automatischen Handhabungseinrichtung,
wobei ein Bediener einen als Positionsanzeigevorrichtung fungierenden Laserpointer (20) justiert und nach erfolgter Justierung eine Orientierung des Laserpointers (20) durch Betätigen eines dafür vorgesehenen Bedienelements bestätigt,
wobei der Laserpointer (20) mit zumindest einem Freiheitsgrad beweglich angeordnet ist,
wobei der Laserpointer (20) ortsfest in einer Vorrichtung angebracht ist, die eine Schwenkbewegung in zumindest einer Ebene und zumindest als Nickbewegung erlaubt,
wobei mit oder nach der Bestätigung die Orientierung des Laserpointers (20) aufgenommen und in Bewegungsdaten zur Positionierung der Handhabungseinrichtung umgewandelt wird und
wobei zur Aufnahme der Orientierung des Laserpointers (20) eine Positionsinformation in Bezug auf den oder jeden Freiheitsgrad aufgenommen wird.

2. Verfahren nach Anspruch 1,
wobei der Bediener ein Bediener einer Bohranlage ist,
wobei der Bediener den Laserpointer (20) auf eine Verbindungsstelle (14) zwischen zwei Gestängeelementen (12) eines Bohrstrangs (10) richtet sowie nach erfolgter Justierung die Orientierung des Laserpointers (20) bestätigt und
wobei auf der Basis der danach aufgenommenen Orientierung des Laserpointers (20) ein Zangensystem (26) in Bezug auf die Verbindungsstelle (14) automatisch positioniert und eine Steuerung des Zangensystems (26) aktiviert oder zur Aktivierung freigeschaltet wird.

3. Vorrichtung zur halbautomatischen Positionierung einer Handhabungseinrichtung oder einer automatischen Handhabungseinrichtung,
mit einem durch einen Bediener justierbaren und als Positionsanzeigevorrichtung fungierenden Laserpointer (20), mit einem Bedienelement als Mittel zum Bestätigen einer Orientierung des Laserpointers (20) nach erfolgter Justierung und
mit Mitteln zum Erfassen einer Orientierung des Laserpointers (20) sowie Mitteln zur Umwandlung der erfassten Orientierung in Bewegungsdaten zur Positionierung der Handhabungseinrichtung,
wobei der Laserpointer (20) mit zumindest einem Freiheitsgrad beweglich angeordnet ist,
wobei der Laserpointer (20) ortsfest in einer Vorrichtung angebracht ist, die eine Schwenkbewegung in zumindest einer Ebene und zumindest als Nickbewegung erlaubt, und
wobei zur Aufnahme der Orientierung des Laserpointers (20) eine Positionsinformation in Bezug auf den oder jeden Freiheitsgrad aufgenommen wird.

4. Vorrichtung nach Anspruch 3, wobei der Laserpointer (20) ortsfest in einer Vorrichtung angebracht ist, die eine Schwenkbewegung in einer Ebene als Nickbewegung erlaubt.

5. Vorrichtung nach einem der Ansprüche 3 oder 4, mit einer Bedieneinrichtung zur Beeinflussung der Orientierung des Laserpointers (20).

6. Vorrichtung nach Anspruch 5, wobei die Bedieneinrichtung im Betrieb zur Ansteuerung zumindest eines Aktors zur Beeinflussung der Orientierung des Laserpointers (20) wirksam ist und wobei die Positionsinformation anhand der Ansteuerung des oder jedes Aktors abgeleitet wird.

7. Computerprogramm oder Computerprogrammprodukt mit durch einen Computer ausführbaren Programmcodeanweisungen zur Implementierung des Verfahrens nach einem der Ansprüche 1 bis 2 wenn das Computerprogramm auf einem Computer ausgeführt wird.

8. Bohranlage für Tiefbohrungen mit einer Vorrichtung nach einem der Ansprüche 3 bis 6.

9. Bohranlage nach Anspruch 8, wobei in die Vorrichtung ein Computerprogramm nach Anspruch 7 geladen ist.

## Claims

1. A method for semiautomatic positioning of a handling device or an automatic handling device,
wherein an operator adjusts a laser pointer (20) that functions as a position indicator device, and after successful adjustment, confirms an orientation of the laser pointer (20) by actuation of an operating element provided for this purpose,
wherein the laser pointer (20) is disposed to be movable with at least one degree of freedom,
wherein the laser pointer (20) is mounted in a stationary position in a device that allows a pivoting movement in at least one plane and at least as a pitching movement,
wherein with or after the confirmation the orientation of the laser pointer (20) is recorded and converted into motion data, for the positioning of the handling device, and
wherein position information is recorded with respect to the/each degree of freedom for recording the orientation of the laser pointer (20).

2. The method according to claim 1,
wherein the operator is an operator of a drilling rig,
wherein the operator directs the laser pointer (20) at a connection point (14) between two rod elements (12) of a drill string (10), and after successful adjustment, the operator confirms the orientation of the laser pointer (20), and
wherein a plier system (26) is positioned automatically with respect to the connection point (14) on the basis of the orientation of the laser pointer (20) recorded thereafter, and control of the plier system (26) is activated or is cleared for activation.

3. A device for semiautomatic positioning of a handling device or an automatic handling device,
comprising a laser pointer (20) that is adjustable by an operator and functions as a position indicator device, comprising an operating element as the means for confirmation of the orientation of the laser pointer (20) after successful adjustment, and
comprising means for detecting the orientation of the laser pointer (20) and means for converting the detected orientation into motion data for the positioning of the handling device,
wherein the laser pointer (20) is disposed to be movable with at least one degree of freedom,
wherein the laser pointer (20) is mounted in a stationary position in a device which allows a pivoting movement in at least one plane and at least as a pitching movement, and
wherein position information is recorded with respect to the/each degree of freedom for recording the orientation of the laser pointer (20).

4. The device according to claim 3, wherein the laser pointer (20) is mounted in a stationary position in a device, which allows a pivoting movement in a plane as a pitching movement.

5. The device according to any one of claims 3 or 4, comprising an operating device for influencing the orientation of the laser pointer (20).

6. The device according to claim 5, wherein the operating device is active in operation for controlling at least one actuator for influencing the orientation of the laser pointer (20), and wherein the position information is derived on the basis of the control of the/each actuator.

7. A computer program or computer program product, comprising program code instructions that can be carried out by a computer for implementation of the method according to any one of claims 1 to 2 when the computer program is executed on a computer.

8. A drilling rig for drilling deep wells, comprising a device according to any one of claims 3 to 6.

9. The drilling rig according to claim 8, wherein a computer program according to claim 7 is loaded into the device.

## Revendications

1. Procédé de positionnement semi-automatique d'un dispositif de manutention ou d'un dispositif de manutention automatique,
dans lequel un utilisateur ajuste un pointeur laser (20) servant de dispositif d'affichage de position, et après ajustage, confirme une orientation du pointeur laser (20) en actionnant un élément de commande prévu à cet effet,
dans lequel le pointeur laser (20) est agencé en étant mobile avec au moins un degré de liberté,
dans lequel le pointeur laser (20) est monté de manière stationnaire dans un dispositif permettant un pivotement dans au moins un plan et au moins sous forme de tangage,
dans lequel, en même temps que ou après la confirmation, l'orientation du pointeur laser (20) est enregistrée et convertie en données de déplacement pour positionner le dispositif de manutention, et
dans lequel, pour enregistrer l'orientation du pointeur laser (20), une information de position est enregistrée concernant ledit ou chaque degré de liberté.

2. Procédé selon la revendication 1,
dans lequel l'utilisateur est un utilisateur d'une installation de forage,
dans lequel l'utilisateur dirige le pointeur laser (20) sur une jonction (14) entre deux éléments de tiges (12) d'un train de tiges de forage (10) et, après ajustage, confirme l'orientation du pointeur laser (20), et
dans lequel, sur la base de l'orientation du pointeur laser (20) enregistrée par la suite, un système de pinces (26) est positionné automatiquement par rapport à la jonction (14) et une commande un système de pinces (26) est activée ou débloquée pour être activée.

3. Dispositif de positionnement semi-automatique d'un dispositif de manutention ou d'un dispositif de manutention automatique, comprenant
un pointeur laser (20) servant de dispositif d'affichage de position et pouvant être ajusté par un utilisateur, avec un élément de commande comme moyen de confirmation d'une orientation du pointeur laser (20) après ajustage, et
des moyens pour détecter une orientation du pointeur laser (20) ainsi que des moyens pour convertir l'orientation détectée en données de déplacement pour positionner le dispositif de manutention,
dans lequel le pointeur laser (20) est agencé en étant mobile avec au moins un degré de liberté,
dans lequel le pointeur laser (20) est monté de manière stationnaire dans un dispositif permettant un pivotement dans au moins un plan et au moins sous forme de tangage, et
dans lequel, pour enregistrer l'orientation du pointeur laser (20), une information de position est enregistrée concernant ledit ou chaque degré de liberté.

4. Dispositif selon la revendication 3, dans lequel le pointeur laser (20) est monté de manière stationnaire dans un dispositif permettant un pivotement dans un plan sous forme de tangage.

5. Dispositif selon l'une quelconque des revendications 3 ou 4, comprenant un dispositif de commande pour influencer l'orientation du pointeur laser (20).

6. Dispositif selon la revendication 5, dans lequel le dispositif de commande agit en cours de fonctionnement pour piloter au moins un actionneur afin d'influencer l'orientation du pointeur laser (20), et dans lequel l'information de position est dérivée à l'aide du pilotage dudit ou de chaque actionneur.

7. Programme informatique ou produit de programme informatique avec des instructions de code programme exécutables par ordinateur pour mettre en œuvre le procédé selon l'une quelconque des revendications 1 à 2 lorsque le programme informatique est exécuté sur un ordinateur.

8. Installation de forage pour des forages profonds avec un dispositif selon l'une quelconque des revendications 3 à 6.

9. Installation de forage selon la revendication 8, dans lequel un programme informatique selon la revendication 7 est chargé sur le dispositif.
